# EUROPEAN PATENT SPECIFICATION

(11) **EP 3 699 774 B1**
(45) Date of publication and mention of the grant of the patent: **10.05.2023**
(21) Application number: 20157628.7
(22) Date of filing: 17.02.2020
(51) Int. Cl.: G06F 16/25, G06F 16/901, G06F 16/9038

(54) **KNOWLEDGE-DRIVEN FEDERATED BIG DATA QUERY AND ANALYTICS PLATFORM**
WISSENSGESTEUERTE FÖDERIERTE GROSSDATENABFRAGE UND ANALYSEPLATTFORM
PLATEFORME DE RECHERCHE ET D'ANALYSE DE DONNÉES DE GRANDE TAILLE FÉDÉRÉES AXÉES SUR LES CONNAISSANCES

(30) Priority: 22.02.2019 US 201916282718
(43) Date of publication of application: 26.08.2020
(73) Proprietor: General Electric Company, Schenectady, NY 12345 (US)
(72) Inventor: AGGOUR, Kareem Sherif, Niskayuna, NY 12309 (US); CUDDIHY, Paul, Niskayuna, NY 12309 (US); KUMAR, Vijay Shiv, Niskayuna, NY 12309 (US); WILLIAMS, Jenny Marie Weisenberg, Niskayuna, NY 12309 (US); VINCIQUERRA, Anthony Joseph, Niskayuna, NY 12309 (US)
(74) Representative: Hafner & Kohl PartmbB

(56) References cited:
- US-A1- 2008 077 598
- US-A1- 2017 374 392
- US-A1- 2019 034 811

## Description

### BACKGROUND

In many enterprises and/or organizations (e.g., commercial/industrial, academic, governmental, medical, etc.) multiple different kinds of data may be used and stored - for example, time series, property graphs, string tables, numeric data, images or other large files (which can be stored as binary large objects (BLOBs)), etc. Because these datasets vary widely in terms of format and content, there is minimal basis for querying across them in an integrated manner. Additionally, these data types can be in multiple data stores distributed locally and/or remotely. The conventional approach of a user manually generating multiple queries to interrogate disparate data types located across distributed sources is burdensome in time, network capacity, and infrastructure. This type of approach also requires that the user have knowledge of where the data is stored, how it is stored, and the specific query languages and mechanisms needed to access it. Conventional approaches do not provide a mechanism for describing the contents of these different datasets and how they relate to each other, thus there is no basis for an integrated query approach.

The challenge of analyzing and consuming a wide range of different data types and formats that are fundamentally linked is increasing in recent years as more volumes of data, and a larger diversity of types of data, are being generated and consumed in different industries. Data creation has been exploding for more than a decade, resulting in an explosion in data volume and variety.

Conventional approaches to solving the multimodal data integration problem shoehorn all different types of data into some common format within a single repository (e.g., extract/transform/load (ETL) operations into a large data warehouse), taking many different types of data, many of which are inherently non-relational, and forcing them into a relational structure. This approach is suboptimal with respect to both data storage and query performance.

Another more recent conventional approach requires the collection of different types of data forms into a single "no SQL" (NoSQL) data store. A NoSQL data store is attractive in that they make no assumptions about the format or structure of the data, however, this also leads to suboptimal performance with respect to both data storage and query performance. Software and systems accessing a NoSQL repository must have *a priori* knowledge of how the data is structured to meaningfully interact with the data, applying that structure every time any data is retrieved from the NoSQL store. Thus, this conventional approach is also suboptimal. First, the data needs to be relocated into a single NoSQL data store; and second, a NoSQL data store ignores the structural attributes of the different data formats that are traditionally used to minimize the data storage footprint and maximize read performance, write performance, or both. NoSQL stores are unable to benefit from any such optimizations.

Another conventional approach to integrate multimodal datasets involves building complex middleware that queries across diverse datastores using a common query language. However, this middleware approach is premised on the user knowing the storage locations of each type of data and invoking the appropriate middleware components as needed.

What is missing from the art is a system that provides a flexible, logical view of multiple disparate datastores in a manner that eliminates the need for a user to have knowledge of the underlying data types, locations and storage mechanisms, and that also provides a way to describe the different data and the relationships between them. US2008077598A1 relates to a query front end system for enabling a user to generate queries to distributed databases through a common semantic interface.

### BRIEF DESCRIPTION OF THE DRAWINGS

FIG. 1 illustrates a three-tier system in accordance with embodiments;
FIGS. 2A-2D illustrate exemplary data presentations in accordance with embodiments;
FIG. 3 illustrates a process of querying federated data stores in accordance with embodiments; and
FIG. 4 illustrates a system for implementing the three-tier system of FIG. 1 in accordance with embodiments.

### DESCRIPTION

The invention is defined by the features of the independent claims. Further embodiments are the subject-matter of the dependent claims. Embodying systems and methods provide a mechanism for users to interact with diverse, heterogeneous data as though it were all stored within the same physical system. Further, a user can run analytics on that data without having to define an external environment to host those analytics. Embodying systems and methods remove from the user the burden of knowing where the data is stored, how it is stored, or what specific query languages and mechanisms are needed to access different data types.

In accordance with embodiments, a user is presented with a single, logical interface through which they can interact with the data and run analytics, without needing knowledge or information regarding the infrastructure being queried. Embodiments solve a significant challenge for data scientists and others who require access to diverse types of data to do their jobs. Development of multimodal data-driven applications is simplified. Developers can use application programming interfaces (APIs) available with an embodying interface to build applications with a single logical view to potentially many diverse, federated data stores. These applications can be built to pull data from and/or push data to the federated data stores. Software developers also benefit as they do not have to be aware of the underlying data storage layers, query languages and query mechanisms required to query and retrieve data from each of the various data repositories when building multimodal data-driven applications. This logical interface can also be used to push data out (for storage) to one or more disparate repositories.

Contrary to conventional approaches, embodying systems and methods do not require the movement of data into a single repository prior to searching. Rather, an embodying interface is a layer through which the user interacts to generate queries to, and receive results from, multiple data stores having a multiplicity of data format types. By not moving data to a single search location, embodying systems and methods avoid excess traffic volume on the network, and reduces the burden on the network infrastructure, thus improving network overall performance - all of which results in improvement over prior systems and approaches. Both technically and commercially, embodiments enable significant savings in time and effort for both data consumers and application developers, by abstracting away the necessary details of selecting and targeting disparate data stores and data types.

Embodying systems include a knowledge-driven query and analysis platform for federated Big Data storage. This query and analysis platform links diverse types of data, located in diverse data stores (i.e., data warehouses, relational or columnar databases, knowledge graphs, time series historians, file stores, etc.) together such that a data consumer does not have to be aware of where the data is physically located; nor be aware of the disparate data formats.

This linkage by embodying systems is achieved without the conventional need to move data to a single location prior to executing a query of the data. Embodying systems and methods respond to queries submitted to the query and analysis platform by searching across one or more elements of the federated Big Data storage environment, as needed. In accordance with embodiments, the query and analysis platform enables the capture and back-end storage of a plethora of diverse data types in datatype-appropriate storage media - each data type can be stored in a repository optimized for the efficient storage and retrieval of large volumes of that type of data (e.g., relational data is captured in a Big Data relational database, time series in a Big Data historian, images in a Big Data file store, etc.).

An embodying query and analysis platform interface enables the execution of queries and analytics directly within the data storage infrastructure to minimize data movement and accelerate analytic runtime. An ontology, a semantic domain model, and/or a linked knowledge graph data model can be implemented to model these stored datasets and data stores, as well as to capture the relationships between the datasets. For discussion purposes, within this document the terms "knowledge graph", "ontology", and "semantic model" are used interchangeably as the modeling mechanism by which the query and analysis platform describes the stored datasets and the relationships between disparate datasets. It should be readily understood that embodying systems and methods are not limited to any specific mechanism but can be implemented by these and any other mechanism that can be used to generate the model.

In accordance with embodiments, query submission to the query and analysis platform can be generated by many types of data consumers and/or users. The terms "consumer" and "user" as used herein can refer to a simulation, an analytic operation, linked data, individual persons of various roles (e.g., modelers, developers, business people, academics, medical and legal professionals, etc.).

A knowledge graph captures metadata on the data storage systems used to house the data, including models of the data stored in each repository, the structure of that data in each repository, and models of how to access those repositories to retrieve the different types of data. Application program interfaces (APIs) built on top of the knowledge graph data and metadata enables any of the user types alike to interact seamlessly with the disparate data via a single interface, without the user needing to be aware of the varying physical data storage locations or their respective query mechanisms/requirements.

Implementing embodying systems and methods can federate pre-existing Big Data systems. Systems and methods disclosed herein can utilize existing data stores including, for example (but not limited to), scalable semantic triple stores, scalable relational databases, scalable time series data stores, scalable image and file stores, and so on. Implementing the embodying query and analysis platform avoids the problems associated with the conventional approach of shoehorning multiple data format types into data stores that may be efficient for one type of data but inefficient for another.

In accordance with embodiments, data is retrieved across the disparate data stores by queries automatically generated by the query layer when a user (person or analytic) requests data from one or more of the underlying repositories. To link data residing across these federated data stores, an ontology (semantic domain model) can be instantiated in a semantic triple store (e.g., a knowledge graph database) to model the underlying data, and relationships, of the federated data stores. This semantic domain model can capture metadata about the specific repositories including their respective requirements to access each type of data. In response to user queries, the query and analysis platform can use this metadata to programmatically construct repository-specific queries and merge the retrieved data without manual intervention.

An embodying system has three tiers. A back-end tier includes the diverse data stored across a federation of data repositories. This back-end tier can have multiple repositories, each optimized for underlying storage efficiency, access performance, and analytic execution. A middle tier includes a semantic toolkit to provide semantic drag-and-drop query generation and data ingestion (e.g., the Semantics Toolkit (SemTK), GE Research, Niskayuna NY). The semantic toolkit provides interfaces with semantic technology stacks by utilizing a knowledge graph model of the data storage systems used to house the data. The knowledge graph layer resides above the Big Data stores and operates as the mechanism through which users and analytics interact with the various stores. Semantic Toolkit APIs can be used to call and interact with the data whether it is stored in the knowledge graph or in one of the other repositories.

The front-end tier provides the user interface experience (UEX) design. Users are presented with a single logical view of the data stored in the system, as represented through the knowledge graph. The UEX allows users to interactively explore the data as though it were captured in a single repository, giving the veneer of a single logical data storage system. The platform further allows users to use the knowledge graph to specify data as input to analytics that run within the platform itself, such that the analytics can efficiently pull the data from across the federated repositories to optimize the analytic runtime.

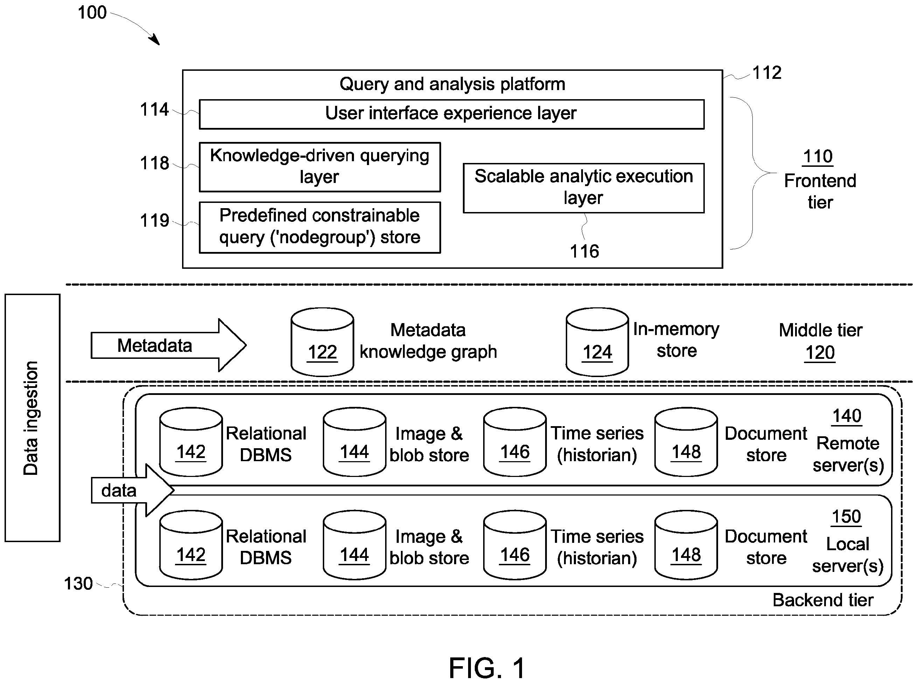

Figure 1 illustrates a three-tier system 100 in accordance with embodiments. Frontend tier 110 includes the query and analysis platform 112 containing user interface experience (UEX) 114, scalable analytic execution layer 116, knowledge-driven query layer 118, and predefined constrainable query (referred to as a 'nodegroup') store 119. The query and analysis platform provides a user with a veneer of a single, common interface from which the user can specify analytic data requirements independent of the repository type and location, data format, and query language. A query of underlying data can be generated from a user request. From this layer, a user can access (e.g., view, transfer, and/or download) the content of a knowledge graph responsive to specified analytic requirements that exposes data of differing types from different data repositories.

UEX 114 provides a dynamic, interactive user interface for a user to access the system. In some implementations, the UEX can include data governance to limit data access based on a user's function within the organization and/or their clearance level.

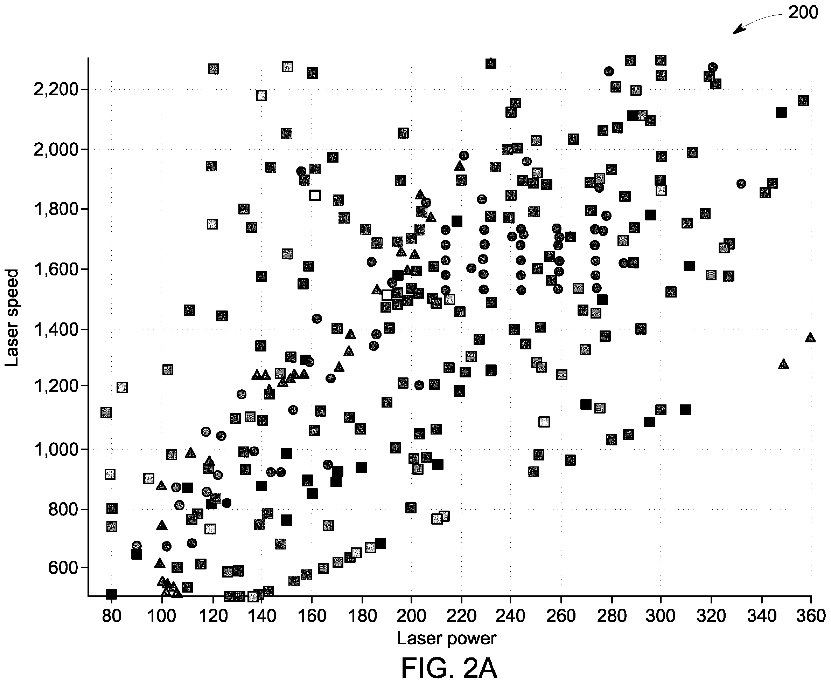

The UEX can present different visualizations of query results. Figures 2A-2D illustrate exemplary representations in accordance with embodiments. For purposes of illustration, FIGS. 2A-2D illustrate query results pertaining to additive manufacturing processes. However, the visualizations are not so limited. It should be readily understood that data visualization is dependent on the subject matter of each domain and the type of data.

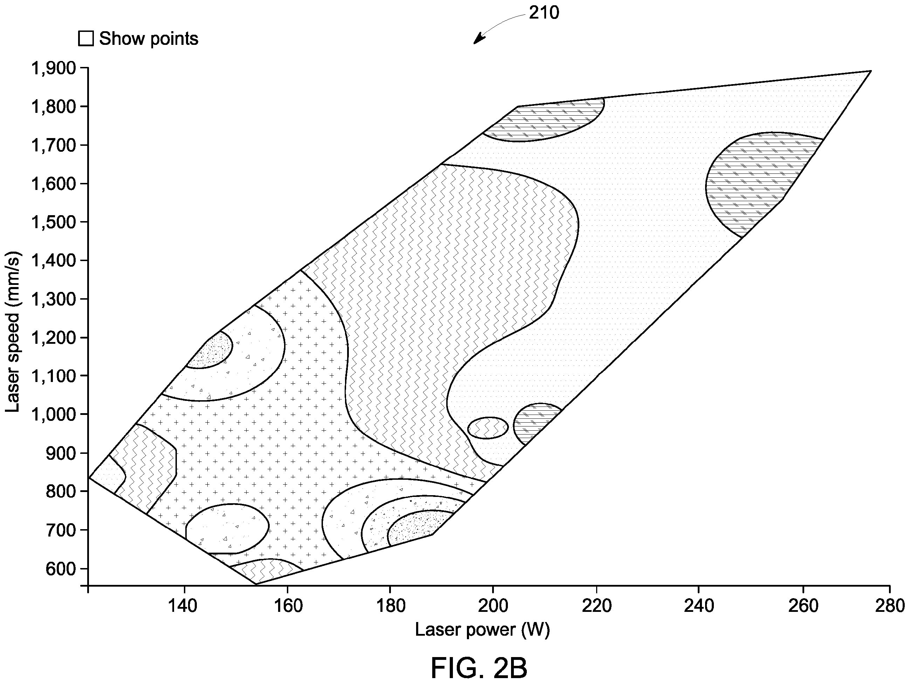

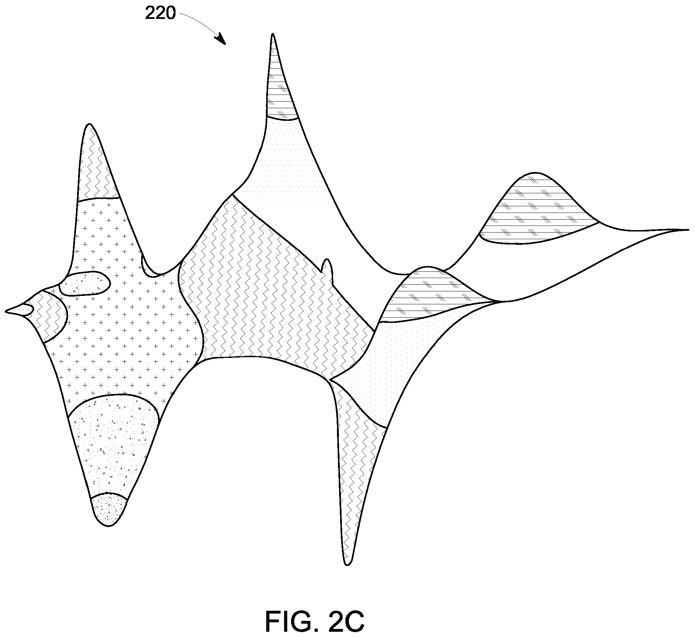

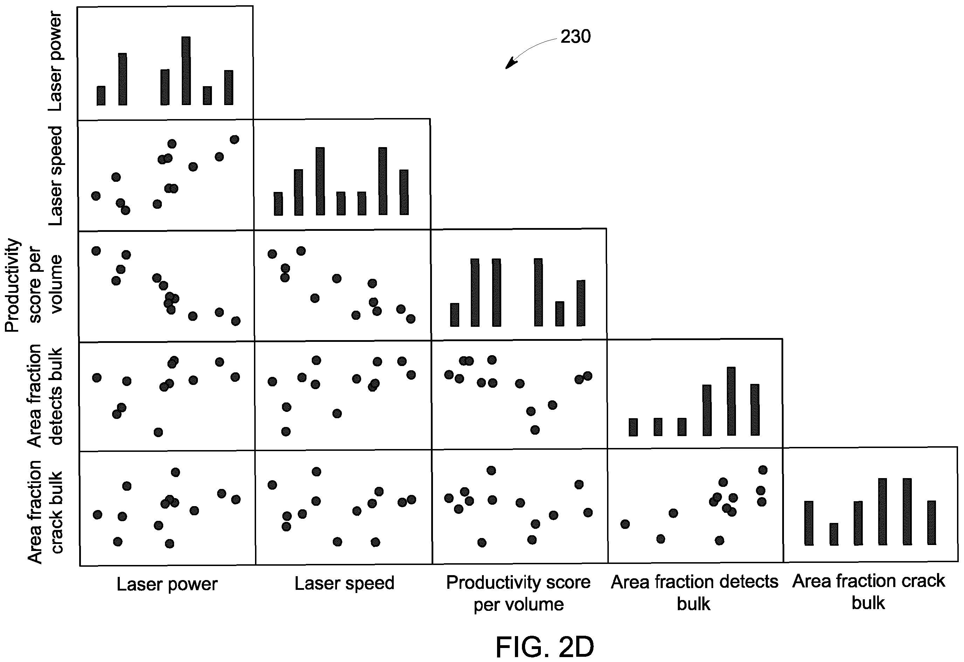

FIG. 2A represents a scatter plot 200; FIG. 2B represents a contour plot 210; FIG. 2C represents a three-dimensional plot 220; FIG. 2D represents a matrix table plot 230. Other visualizations can include time-series plots, images, tabular, etc. In accordance with embodiments, UEX 114 presents interactive visualizations. For example, a user can discern an outlier data point in the visualization; select that data point using a pointing device; and have the underlying data presented for viewing. The underlying data can be presented in the native data format that provided that data point - image, relational data table, document, etc. In accordance with embodiments, a user does need to know the data store source, location, or data type to have the underlying data pulled for presentation.

Scalable analytic execution layer 116 executes a variety of analytics, including, but not limited to, data mining, statistical analysis, image processing, machine learning and artificial intelligence analytics, at scale. Conventional approaches require funneling data from remote locations to a single server and processing a query at that single server. In accordance with embodiments, scalable analytic execution layer 116 can define a query and pass it to the background layer 130 for distributed, parallel execution at the remote data store servers.

Knowledge-driven query layer 118 includes a domain-specific semantic model of the particular use case to which system 100 is being applied. In accordance with implementations, a user's perspective of system 100 is through UEX 114, thus the user only is presented with one interface model for any of these use cases.

The knowledge-driven query layer is in communication with nodegroup store 119 containing a library of use case-driven, domain-specific nodegroups that may extract data from the federated data stores. The use of nodegroups achieves the goal of separating the analysis platform UEX (and users, analytics, simulations, etc.) from the federated data stores. Each nodegroup can describe linked data subgraphs-of-interest. One or more nodegroups can be used to generate queries of entire data sets, generate legal (i.e., filtered) values for each "column" of the data set, count data, or ingest data. The nodegroup store can include domain-specific nodegroups, which can be retrieved to perform straightforward data retrieval operations on one or more federated data stores. Each nodegroup is a predefined, constrainable query prepared specifically to retrieve and possibly join together a specific subset of data.

A nodegroup represents a subgraph of interest needed to fulfill a user query. This subgraph representation contains a set of classes, a list of properties that are returnable or constrainable for each class, and properties which link the class to other classes in the nodegroup. The nodegroup may contain other information as well. A particular nodegroup can be selected from the knowledge-driven query layer 118 based on the user query.

The knowledge-driven query layer can include services and libraries for processing the nodegroup to determine the division between semantic and non-semantic data. In accordance with embodiments, semantic models are used to model diverse data stores, and enable the linking of data based on the user's request.

Each nodegroup is a pre-defined template used to assemble a query based on the user's request entered in UEX 114. Each nodegroup may span different parts of a domain-specific ontology. Conventionally, these different data stores would not be available from a single federated query.

From the information contained in a nodegroup (e.g., classes, attributes, class links, etc.), several types of queries can be generated. These queries can include retrieving distinct entries, which are constructed by walking the entire nodegroup and building connections and constraints. Constraint clauses can be further dynamically added to a larger query. For any nodegroup query, any element can be removed from the return list such that the remaining query could be narrowed so that it returns values of a single variable. This would result in a query that retrieves all existing values of a specific variable. In practical terms, this generates a list of legal filter values for any item in the query based upon existing data, which could be used to filter results in a larger query. In addition to `select' queries that return data, the nodegroup can also be used to generate 'insert' queries to add data to constituent data stores of the federated stores. The nodegroup can also be used to generate 'count', 'construct', and 'delete' queries.

The nodegroup can also be used as an exchangeable artifact, allowing a subgraph of interest to be captured, stored for future use, or passed between environments. With the help of ontology information, the nodegroup data structure can be much more effectively validated, modified, and displayed than could a raw query.

When building a nodegroup, pathfinding functionality is used to find connections between different classes in the ontology. The class to be added is considered the path endpoint, and all the classes in the existing nodegroup as potential start points. Any intervening classes are suggested as part of the potential paths between the existing nodegroup and the class to add to the query. A specific embodiment of pathfinding is implemented with the A* algorithm, with a few modifications for performance.

Pathfinding assists in query-building, and also can be used in determining if, and what, external services need to be called to retrieve data. Pathfinding techniques can be applied to identify these external services, by identifying classes that model external datasets as required to complete a query connecting multiple entities in the knowledge graph. These external services can require additional information (e.g., calling parameters) specific to particular data stores and data types within a particular store. Pathfinding allows this information to be located and added to the query on demand, without human intervention.

Middle tier 120 may include an in-memory data store 124, which can be used as a memory cache for small subsets of data. Metadata knowledge graph 122 captures metadata regarding links and relationships of the data across the federated data stores. For example, the metadata knowledge graph can contain information about the federated data stores (e.g., location, data structure(s), query language(s), etc.). The metadata knowledge graph also includes information about their contents - the data available from each store of the federated data store (e.g., location, type/format, file size, etc.). The metadata knowledge graph can access this information by using APIs compatible with individual data store constituents of the federated stores.

Back-end tier 130 is the physical data store hardware and management systems on which the data is deployed. Each physical data store can be a scalable repository optimized for each data type that it contains. The back-end tier can include remote server(s) 140 and local server(s) 150. Local and remote servers can include a portion of, or all of, relational DBMS store(s) 142, image and BLOB store(s) 144, time series data store(s) 146, and document storage store(s) 148, and more. The location of a particular data store needed to fulfill a user's query is transparent to the user interfacing with system 100 through query and analysis platform 112.

The federated data store is a global data store that captures information - for example, in additive manufacturing data can be captured across all factories, printers, parts, materials, etc., to capture global knowledge across a manufacturer. Frequent synchronization allows data and knowledge to be shared between edge devices and federated stores, so that edge devices have the information they need to operate while central storage retains a complete record of the most relevant information for machine learning and analytics to drive optimizations over time. This data architecture efficiently and scalably stores data and data relationships, to enable access and rapid analytics across data types across the additive manufacturing lifecycle.

Middle tier 120 and back-end tier 130 ingest data provided by use case-specific elements. For example, an additive manufacturing system can have various data sources across the additive machine production lifecycle, including: materials properties, part designs, design simulations, build and post-process parameters, parts and product inspection results, etc. Middle tier 120 and back-end tier 130 ingest data provided by use case-specific elements. Detailed data is stored in the back-end tier federated stores, and the middle tier absorbs metadata that is used as described above to select nodegroup(s) to generate the user's query.

Embodying systems and methods provide a user (i.e., data consumer) the ability run an analytic on a large volume of data captured in the federated data store without needing to extract that distributed data from one or more data stores prior to running the analytic. Conventional approaches to executing analytics is to extract data from one or more data stores all at once and push the extracted data to a single machine for processing. However, advances in data storage capacity and breadth renders this conventional approach untenable for Big Data - the amount of extracted data may be too large to load onto a single server and may take too long to transfer over the network from tens or hundreds of machines to a single machine.

In accordance with embodiments, a query is automatically analyzed to identify if it will require the extraction of too much data for moving and processing on a single server. If such a condition is found, embodiments break the query into many smaller subqueries and pass the smaller subqueries to distributed servers holding portions of the Big Data. Each of these distributed machines will then run the subquery on their local data in parallel with the other subqueries. For example, if the conventional approach of a single overarching query would result in a response of ten million records to be extracted and queried at a single machine, embodiments could generate 1,000 query tasks to run in parallel at distributed locations in the federated data store. These 1,000 query tasks could then each process 10,000 distinct records locally, thus avoiding the need to extract the full 10 million records to a single location.

The results generated from the local processing of the query tasks can then be passed to the scalable analytic execution layer for aggregation of the results. The scalable analytic execution layer can perform operations on the aggregated results (depending on the specific analytic requirements). Thus, embodiments avoid the creation of data movement and data processing bottlenecks while still delivering knowledge-driven query and analysis capabilities across federated Big Data. Embodying approaches to data abstraction are bidirectional - i.e., the user does not need to know details of where or how the data is stored; and similarly the scalable analytics also do not need to know details of where or how the data is stored.

Embodying systems and methods leverage conventional massive data distribution and parallel processing techniques (e.g., Apache Hadoop^{®} and Apache Spark^{®} (Apache Software Foundation, Wakefield, MA)) without having to embed knowledge of the federated data stores directly into the Hadoop or Spark code- e.g., in accordance with embodiments the Hadoop or Spark analytics are fed queries they can execute to extract data from one or more of the repositories without knowing precisely where the data comes from.

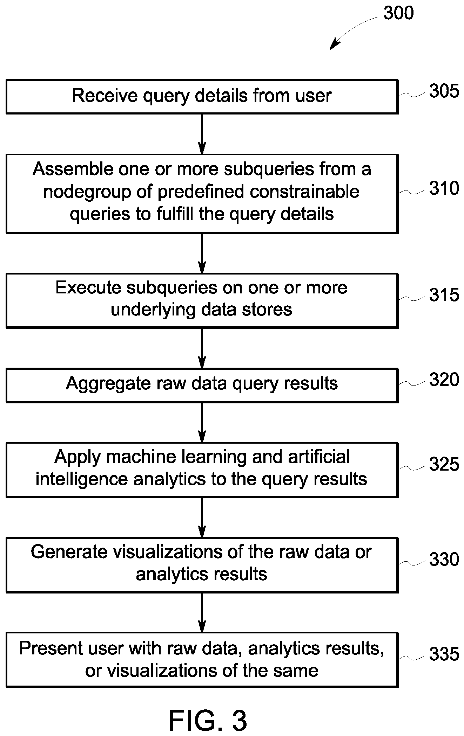

Figure 3 illustrates process 300 to query federated data stores in accordance with embodiments. Query and analysis platform 112 receives query details, step 305, provided by a data consumer to UEX 114. One or more subqueries are assembled from a nodegroup of predefined constrainable queries to fulfill the user provided query details, step 310. Metadata knowledge graph 122 can apply a domain-specific semantic model to the query details to identify the subqueries based on metadata of the federated stores. These subqueries can perform a particular query at specific data stores in the federated stores.

The subqueries are executed, step 315, at one or more of the underlying data stores within the federated data store. Raw data results of the subqueries are aggregated, step 320. In accordance with implementations, scalable analytic execution layer 116 can optionally apply machine learning and artificial intelligence techniques to the query results, step 325. These techniques identify data correlations responsive to the consumer's query details. Visualizations of the raw data or analytic results can be generated, step 330. The visualizations of raw data and/or analytic results, or the raw data and/or analytic results in native format (e.g., relational data, time series data, images, document, etc.) can be presented to the data consumer, step 335.

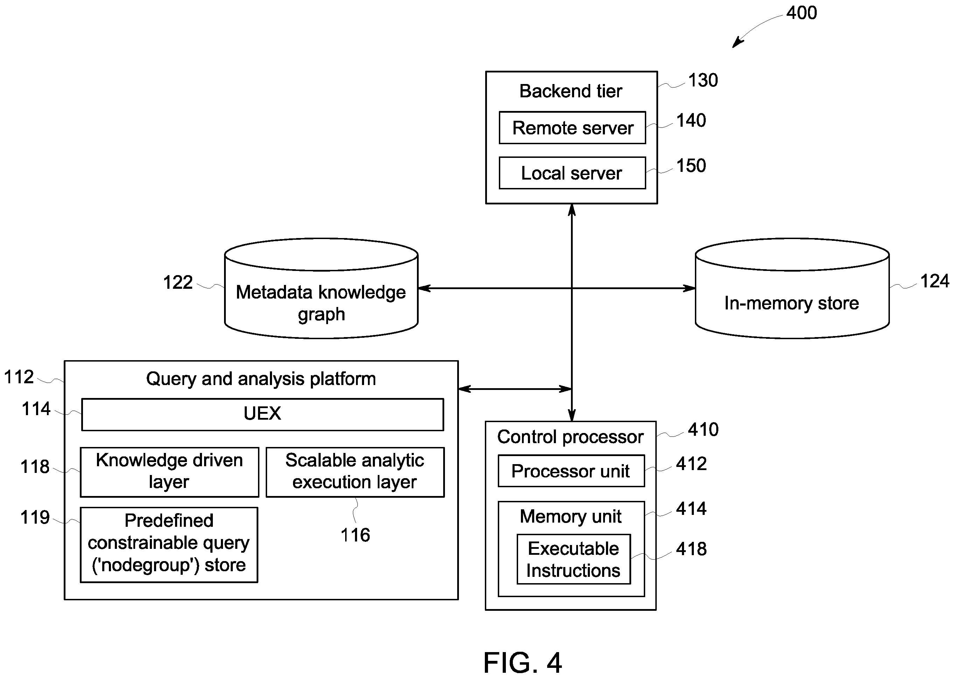

Figure 4 illustrates system 400 for implementing three-tier system 100 in accordance with embodiments. Control processor 410 can include processor unit 412 and memory unit 414. The memory unit can store executable instructions 418. The control processor can be in communication with elements of system 100 across local control/data networks and/or electronic communication networks, as needed. Processor unit 412 can execute executable instructions 418, which cause the processor to perform the querying of federated data stores in accordance with embodiments as disclosed above. Memory unit 414 can provide the control processor with local cache memory.

In accordance with some embodiments, a computer program application stored in non-volatile memory or computer-readable medium (e.g., register memory, processor cache, RAM, ROM, hard drive, flash memory, CD ROM, magnetic media, etc.) may include code or executable program instructions that when executed may instruct and/or cause a controller or processor to perform methods discussed herein such as a method of connecting to multiple, distributed data stores containing various data types to obtain a result to a user's query submitted through a single user interface by generating subqueries of the distributed analytics, as disclosed above.

The computer-readable medium may be a non-transitory computer-readable media including all forms and types of memory and all computer-readable media except for a transitory, propagating signal. In one implementation, the non-volatile memory or computer-readable medium may be external memory.

Although specific hardware and methods have been described herein, note that any number of other configurations may be provided in accordance with embodiments of the invention. Thus, while there have been shown, described, and pointed out fundamental novel features of the invention, it will be understood that various omissions, substitutions, and changes in the form and details of the illustrated embodiments, and in their operation, may be made by those skilled in the art without departing from the scope of the invention. Substitutions of elements from one embodiment to another are also fully intended and contemplated. The invention is defined solely with regard to the claims appended hereto.

## Claims

1. A system (110) for generating and running federated queries pertaining to additive manufacturing processes against a plurality of data stores (142, 144, 146, 148) across an additive machine production lifecycle, including: materials properties, part designs, design simulations, build and post-process parameters, parts and product inspection results, the data stores (142, 144, 146, 148) storing disparate data types captured across all factories, printers, parts, materials, for capturing global knowledge across a manufacturer, the system comprising:
a user interface experience layer (114) presenting an interactive user interface to receive query details from a data consumer;
a metadata knowledge graph store including a metadata knowledge graph (122), the metadata knowledge graph containing metadata for links and relationships of data in one or more of the plurality of data stores, and metadata on how to programmatically query one or more of the plurality of data stores;
a nodegroup store (119) including a library of use case and domain-specific predefined constrainable queries;
a knowledge-driven querying layer (118) including services and libraries to process nodegroups, including to determine a division between semantic and non-semantic data within the nodegroup;
the knowledge-driven querying layer configured to generate a set of queries from the selected nodegroups;
a query and analysis platform (112) configured to provide the set of queries to the federated data store, one or more of the plurality of data stores executing at the federated data store at least one of the set of queries and returning a result to the query and analysis platform;
a scalable analytic execution layer (116) configured to receive the search results executed at the federated data store and to apply machine learning and artificial intelligence techniques to the search results, the machine learning and artificial intelligence techniques to analyze the query results to obtain analytic results; and
the query and analysis platform configured to present visualizations of the analytic results to the data consumer, wherein each of the nodegroups including a pathfinding functionality to locate and add information specific to particular data types within a particular data store of the plurality of data stores to identify external services required to execute one or more of the set of queries at the federated data store, wherein each of the nodegroups including properties that link at least one class of a set of classes contained in the nodegroup to one or more other of the set of classes, wherein each of the nodegroups including a list of properties that are at least one of returnable or constrainable for a set of classes contained in the nodegroup, wherein , each of the nodegroups including information to generate a list of filter values to include in the set of queries, wherein each of the nodegroups including a template designed to query a different part of a domain-specific ontology, wherein the system (110) is configured to break the query into many smaller subqueries and pass the smaller subqueries to distributed servers holding portions of the Big Data, wherein the system (110) is configured to aggregate raw data results of the subqueries.

2. The system of claim 1, each of the nodegroups representing a subgraph of interest containing a set of classes and an identifier.

3. The system of claim 1, each of the nodegroups including an identifier used to generate search queries that perform constraints for a set of classes contained in the nodegroup.

4. A method of generating and running federated queries pertaining to additive manufacturing processes against a plurality of data stores (142, 144, 146, 148) across the additive machine production lifecycle, including: materials properties, part designs, design simulations, build and post-process parameters, parts and product inspection results, the data stores (142, 144, 146, 148) storing disparate data types captured across all factories, printers, parts, materials, for capturing global knowledge across a manufacturer storing disparate data types, the method comprising:
receiving query details from a data consumer;
providing a metadata knowledge graph (122) containing metadata for links and relationships of data in one or more of the plurality of data stores, and metadata on how to programmatically query one or more of the plurality of data stores;
providing in a nodegroup store (119) a library of use case and domain-specific predefined constrainable queries
the nodegroups providing a template to search at least one of the plurality of data stores;
processing nodegroups using services and libraries in a knowledge-driven querying layer (118) to determine a division between semantic and non-semantic data;
generating a set of queries from the selected nodegroups;
executing at the federated data store the set of queries and returning a result to an analysis platform located in a layer remote from the federated data store;
applying machine learning and artificial intelligence techniques to the search results, the machine learning and artificial intelligence techniques to analyze the query results to obtain analytic results; and
presenting visualizations of the analytic results to the data consumer, providing each of the nodegroups with a pathfinding functionality to locate and add information specific to particular data types within a particular data store of the plurality of data stores to identify external services required to execute one or more of the set of queries at the federated data store and providing each of the nodegroups with properties that link at least one class of a set of classes contained in the nodegroup to one or more other of the set of classes and providing each of the nodegroups with a list of properties that are returnable or constrainable for a set of classes contained in the nodegroup and providing each of the nodegroups with information to generate a list of filter values to include in the set of queries and providing each of the nodegroups with a template designed to query a different part of a domain-specific ontology and breaking the query into many smaller subqueries and passing the smaller subqueries to distributed servers holding portions of the Big Data and aggregating raw data results of the subqueries.

5. The method of claim 4, providing each of the nodegroups with a set of classes and an identifier representing a subgraph of interest.

6. The method of claim 4, providing each of the nodegroups with an identifier used to generate search queries that perform constraints for a set of classes contained in the nodegroup.

## Patentansprüche

1. System (110) zum Erzeugen und Ausführen von Verbundabfragen in Bezug auf additive Fertigungsprozesse an einer Vielzahl von Datenspeichern (142, 144, 146, 148) über einen Lebenszyklus der additiven Maschinenfertigung hinweg, aufweisend: Materialeigenschaften, Teiledesigns, Designsimulationen, Aufbau- und Nachbearbeitungsparameter, Teile- und Produktprüfergebnisse, wobei die Datenspeicher (142, 144, 146, 148) unterschiedliche Datentypen speichern, die über sämtliche Fabriken, Drucker, Teile, Materialien hinweg erfasst werden, um ein globales Wissen über einen Hersteller zu erfassen, wobei das System aufweist:
eine Benutzerschnittstellen-Erfahrungsschicht (114), die eine interaktive Benutzerschnittstelle darstellt, um Abfragedetails von einem Datenverbraucher zu empfangen;
einen Speicher für einen Metadaten-Wissensgraphen, der einen Metadaten-Wissensgraphen (122) beinhaltet, wobei der Metadaten-Wissensgraph Metadaten für Verknüpfungen und Beziehungen von Daten in einem oder mehreren der Vielzahl von Datenspeichern sowie Metadaten darüber enthält, wie einer oder mehrere der Vielzahl von Datenspeichern programmgesteuert abgefragt werden;
einen Knotengruppenspeicher (119), der eine Bibliothek von Anwendungsfällen und domänenspezifischen vordefinierten einschränkbaren Abfragen enthält;
eine wissensgesteuerte Abfrageschicht (118) mit Diensten und Bibliotheken zum Verarbeiten von Knotengruppen, einschließlich zum Bestimmen einer Unterteilung zwischen semantischen und nicht-semantischen Daten innerhalb der Knotengruppe;
wobei die wissensgesteuerte Abfrageschicht derart konfiguriert ist, dass sie einen Satz von Abfragen aus den ausgewählten Knotengruppen erzeugt;
eine Abfrage- und Analyseplattform (112), die derart konfiguriert ist, dass sie dem Verbunddatenspeicher den Satz von Abfragen bereitstellt, wobei einer oder mehrere der Vielzahl von Datenspeichern in dem Verbunddatenspeicher zumindest eine des Satzes von Abfragen ausführen und ein Ergebnis an die Abfrage- und Analyseplattform zurücksenden;
eine skalierbare Analyseausführungsschicht (116), die derart konfiguriert ist, dass sie die im Verbunddatenspeicher ausgeführten Suchergebnisse empfängt und Techniken des maschinellen Lernens und der künstlichen Intelligenz auf die Suchergebnisse anwendet, wobei die Techniken des maschinellen Lernens und der künstlichen Intelligenz die Abfrageergebnisse analysieren; und
wobei die Abfrage- und Analyseplattform derart konfiguriert ist, dass sie dem Datenverbraucher Visualisierungen der Analyseergebnisse präsentiert, wobei jede der Knotengruppen eine Pfadfindungsfunktion zum Lokalisieren und Hinzufügen von Informationen aufweist, die für bestimmte Datentypen in einem bestimmten Datenspeicher der Vielzahl von Datenspeichern spezifisch sind, um externe Dienste zu identifizieren, die zum Ausführen einer oder mehrerer Abfragen an dem Verbunddatenspeicher erforderlich sind, wobei jede der Knotengruppen Eigenschaften enthält, die zumindest eine Klasse eines Satzes von Klassen, die in der Knotengruppe enthalten sind, mit einer oder mehreren anderen des Satzes von Klassen verknüpfen, wobei jede der Knotengruppen eine Liste von Eigenschaften, die zurückgebbar und/oder einschränkbar sind, für einen Satz von Klassen, die in der Knotengruppe enthalten sind, enthält, wobei jede der Knotengruppen Informationen enthält, um eine Liste von Filterwerten zu erzeugen, die in den Satz von Abfragen aufzunehmen sind, wobei jede der Knotengruppen eine Vorlage enthält, die eingerichtet ist, einen anderen Teil einer domänenspezifischen Ontologie abzufragen, wobei das System (10) konfiguriert ist, die Anfrage in viele kleinere Teilabfragen aufzuteilen und die kleinen Teilabfragen an verteilte Server weiterzuleiten, welche Teile der Big Data vorhalten, wobei das System (110) eingerichtet ist, Rohdatenergebnisse der Teilabfragen zu aggregieren.

2. System nach Anspruch 1, wobei jede der Knotengruppen einen Untergraphen von Interesse darstellt, der einen Satz von Klassen und eine Kennung enthält.

3. System nach Anspruch 1, wobei jede der Knotengruppen eine Kennung enthält, die verwendet wird, um Suchanfragen zu erzeugen, die Beschränkungen für einen Satz von Klassen ausführen, die in der Knotengruppe enthalten sind.

4. Verfahren zum Erzeugen und Ausführen von Verbundabfragen in Bezug auf additive Fertigungsprozesse gegen eine Vielzahl von Datenspeichern (142, 144, 146, 148) über den Lebenszyklus der additiven Maschinenfertigung hinweg, aufweisend: Materialeigenschaften, Teiledesigns, Designsimulationen, Aufbau- und Nachbearbeitungsparameter, Teile- und Produktprüfergebnisse, wobei die Datenspeicher (142, 144, 146, 148) unterschiedliche Datentypen speichern, die über sämtliche Fabriken, Drucker, Teile, Materialien hinweg erfasst werden, um ein globales Wissen über einen Hersteller zu erfassen, wobei das Verfahren umfasst:
Empfangen von Abfragedetails von einem Datenverbraucher;
Bereitstellen eines Metadaten-Wissensgraphen (122), der Metadaten für Verknüpfungen und Beziehungen von Daten in einem oder mehreren der Vielzahl von Datenspeichern und Metadaten darüber enthält, wie ein oder mehrere der Vielzahl von Datenspeichern programmgesteuert abgefragt werden;
Bereitstellen einer Bibliothek von anwendungsfall- und domänenspezifischen vordefinierten einschränkbaren Abfragen in einem Knotengruppenspeicher (119);
wobei die Knotengruppen eine Vorlage bereitstellen, um zumindest einen der Vielzahl von Datenspeichern zu durchsuchen;
Verarbeiten von Knotengruppen unter Verwendung von Diensten und Bibliotheken in einer wissensgesteuerten Abfrageschicht (118), um eine Aufteilung zwischen semantischen und nicht-semantischen Daten zu bestimmen;
Erzeugen eines Satzes von Abfragen aus den ausgewählten Knotengruppen;
Ausführen des Satzes von Abfragen an dem Verbunddatenspeicher und Zurückgeben eines Ergebnisses an eine Analyseplattform, die sich in einer von dem Verbunddatenspeicher entfernten Schicht befindet;
Anwenden von Techniken des maschinellen Lernens und der künstlichen Intelligenz auf die Suchergebnisse, wobei die Techniken des maschinellen Lernens und der künstlichen Intelligenz die Abfrageergebnisse analysieren; und
Präsentieren von Visualisierungen der Analyseergebnisse für den Datenverbraucher, Versehen jeder der Knotengruppen mit einer Pfadfindungsfunktionalität zum Lokalisieren und Hinzufügen von Informationen, die für bestimmte Datentypen innerhalb eines bestimmten Datenspeichers der Vielzahl von Datenspeichern spezifisch sind, um externe Dienste zu identifizieren, die erforderlich sind, um einen oder mehrere des Satzes von Abfragen an dem Verbunddatenspeicher auszuführen, und Versehen von jeder der Knotengruppen mit Eigenschaften, die zumindest eine Klasse eines Satzes von Klassen, die in der Knotengruppe enthalten sind, mit einer oder mehreren anderen des Satzes von Klassen verknüpft, und Versehen von jeder der Knotengruppen mit einer Liste von Eigenschaften, die zurückgebbar und einschränkbar sind, für einen Satz von Klassen, der in der Knotengruppe enthalten ist, und Versehen von jeder der Knotengruppen mit Informationen, um eine Liste von Filterwerten zu erzeugen, die in dem Satz von Abfragen aufgenommen werden sollen, und Versehen von jeder Knotengruppen mit einer Vorlage, die eingerichtet ist, einen anderen Teil einer domänenspezifischen Ontologie abzufragen, und Aufteilen der Abfrage in viele kleinere Teilabfragen und Weiterleiten der kleineren Abfragen an verteilte Server, welche Abschnitte der Big Data vorhalten, und Aggregieren von Rohdatenergebnissen der Teilabfragen.

5. Verfahren nach Anspruch 4, das jede der Knotengruppen mit einem Satz von Klassen und einer Kennung versieht, die einen Untergraphen von Interesse darstellt.

6. Verfahren nach Anspruch 4, das jede der Knotengruppen mit einer Kennung versieht, die verwendet wird, um Suchabfragen zu erzeugen, die Beschränkungen für einen Satz von Klassen ausführen, die in der Knotengruppe enthalten sind.

## Revendications

1. Système (110) pour générer et lancer des requêtes fédérées se rapportant à des procédés de fabrication additive par rapport à une pluralité de magasins de données (142, 144, 146, 148) à travers un cycle de production de machine additive, comportant : des propriétés de matériaux, des conceptions de pièces, des simulations de conception, des paramètres de construction et de post-traitement, des résultats d'inspection de pièces et de produits, les magasins de données (142, 144, 146, 148) stockant des types de données disparates collectées dans la totalité des usines, imprimantes, pièces, matériaux, pour collecter des connaissances globales sur un fabricant, le système comprenant :
une couche d'expérience d'interface utilisateur (114) présentant une interface utilisateur interactive pour recevoir des détails de requête d'un utilisateur de données ;
un magasin de graphes de connaissances de métadonnées comportant un graphe de connaissances de métadonnées (122), le graphe de connaissances de métadonnées contenant des métadonnées pour des liens et des liaisons de données dans un ou plusieurs de la pluralité de magasins de données, et des métadonnées sur la manière d'interroger de manière programmée un ou plusieurs de la pluralité de magasins de données ;
un magasin de groupements de noeuds (119) comportant une librairie de cas d'utilisation et de requêtes pouvant être limitées prédéfinies spécifiques à un domaine ;
une couche d'interrogation basée sur les connaissances (118) comportant des services et des librairies pour traiter des groupements de noeuds, y compris pour déterminer une division entre des données sémantiques et des données non sémantiques au sein du groupement de noeuds ;
une couche d'interrogation basée sur les connaissances configurée pour générer un ensemble de requêtes provenant des groupements de noeuds sélectionnés ;
une plateforme de requête et d'analyse (112) configurée pour fournir l'ensemble de requêtes au magasin de données fédérées, un ou plusieurs de la pluralité de magasins de données exécutant dans le magasin de données fédérées au moins un des ensembles de requêtes et renvoyant un résultat à la plateforme de requête et d'analyse ;
une couche d'exécution analytique évolutive (116) configurée pour recevoir les résultats de recherches exécutées dans le magasin de données fédérées et pour appliquer des techniques d'apprentissage machine et d'intelligence artificielle aux résultats de recherche, les techniques d'apprentissage machine et d'intelligence artificielle permettant d'analyser des résultats de recherche pour obtenir des résultats analytiques ; et
la plateforme de recherche et d'analyse configurée pour présenter des visualisations des résultats analytiques à l'utilisateur de données, dans lequel chaque groupement de noeuds des groupements de noeuds comporte une fonctionnalité de recherche de chemin pour situer et ajouter des informations spécifiques à des types de données particuliers au sein d'un magasin de données particulier de la pluralité de magasins de données pour identifier des services externes requis pour exécuter un ou plusieurs des ensembles de requêtes dans le magasin de données fédérées, dans lequel chaque groupement de noeuds des groupements de noeuds comporte des propriétés qui lient au moins une classe d'un ensemble de classes contenues dans le groupement de noeuds à un ou plusieurs autres des ensembles de classes, dans lequel chaque groupement de noeuds des groupements de noeuds comporte une liste de propriétés au moins du type pouvant être retourné ou pouvant être limité pour un ensemble de classes contenues dans le groupement de noeuds, chaque groupement de noeuds des groupements de noeuds comportant des informations pour générer une liste de valeurs de filtre à inclure dans l'ensemble de requêtes, dans lequel chaque groupement de noeuds des groupements de noeuds comporte un modèle conçu pour interroger une partie différente d'une ontologie spécifique à un domaine, dans lequel le système (110) est configuré pour diviser la requête en de nombreuses sous-requêtes plus petites et pour transférer les sous-requêtes plus petites à des parties de maintien de serveurs distribués du big data, dans lequel le système (110) est configuré pour agréger des résultats de données bruts des sous-requêtes.

2. Système selon la revendication 1, chaque groupement de noeuds des groupements de noeuds représentant un sous-graphe d'intérêt contenant un ensemble de classes et un identifiant.

3. Système selon la revendication 1, chaque groupement de noeuds des groupements de noeuds comportant un identifiant utilisé pour générer des requêtes de recherche qui réalisent des contraintes pour un ensemble de classes contenues dans le groupement de noeuds.

4. Procédé pour générer et lancer des requêtes fédérées se rapportant à des procédés de fabrication additive par rapport à une pluralité de magasins de données (142, 144, 146, 148) au cours du cycle de production de machine additive, comportant : des propriétés de matériaux, des conceptions de pièces, des simulations de conception, des paramètres de construction et de post-traitement, des résultats d'inspection de pièces et de produits, les magasins de données (142, 144, 146, 148) stockant des types de données disparates collectées dans la totalité des usines, imprimantes, pièces, matériaux, pour collecter des connaissances globales d'un fabricant stockant des types de données disparates, le procédé comprenant :
la réception de détails de requête d'un utilisateur de données ;
la fourniture d'un graphe de connaissances de métadonnées (122) contenant des métadonnées de liens et de liaisons de données dans un ou plusieurs de la pluralité de magasins de données, et des métadonnées sur la manière d'interroger de manière programmée un ou plusieurs de la pluralité de magasins de données ;
la fourniture dans un magasin de groupements de noeuds (119) d'une librairie de cas d'utilisation et de requêtes pouvant être limitées prédéfinies spécifiques à un domaine :
les groupements de noeuds fournissant un modèle pour rechercher au moins un de la pluralité de magasins de données ;
le traitement de groupements de noeuds utilisant des services et des librairies dans une couche d'interrogation basée sur les connaissances (118) pour déterminer une division entre des données sémantiques et des données non sémantiques ;
la génération d'un ensemble de requêtes provenant des groupements de noeuds sélectionnés ;
l'exécution, dans le magasin de données fédérées, de l'ensemble des requêtes et le renvoi d'un résultat à une plateforme d'analyse située dans une couche à distance du magasin de données fédérées ;
l'application de technique d'apprentissage machine et d'intelligence artificielle aux résultats de recherche, les techniques d'apprentissage machine et d'intelligence artificielle permettant d'analyser les résultats de recherche pour obtenir des résultats analytiques ; et
la présentation de visualisations des résultats analytiques à l'utilisateur de données, la fourniture à chaque groupement de noeuds des groupements de noeuds d'une fonctionnalité de recherche de chemin pour situer et ajouter des informations spécifiques à des types de données particuliers au sein d'un magasin de données particulier de la pluralité de magasins de données pour identifier des services externes requis pour exécuter un ou plusieurs des ensembles de requêtes dans le magasin de données fédérées et la fourniture à chaque groupement de noeuds des groupements de noeuds de propriétés qui lient au moins une classe d'un ensemble de classes contenues dans le groupement de noeuds à une ou plusieurs autres de l'ensemble de classes et la fourniture à chaque groupement de noeuds des groupements de noeuds d'une liste de propriétés pouvant être retournées ou limitées pour un ensemble de classes contenues dans le groupement de noeuds et la fourniture à chaque groupement de noeuds des groupements de noeuds d'informations pour générer une liste de valeurs de filtre à inclure dans l'ensemble de requêtes et la fourniture à chaque groupement de noeuds des groupements de noeuds d'un modèle conçu pour interroger différentes parties d'une ontologie spécifique à un domaine et la division de la requête en de nombreuses sous-requêtes plus petites et le transfert des sous-requêtes plus petites à des parties de maintien de serveurs distribués du big data et l'agrégation de résultats de données bruts des sous-requêtes.

5. Procédé selon la revendication 4, fournissant à chaque groupement de noeuds des groupements de noeuds un ensemble de classes et un identifiant représentant un sous-graphe d'intérêt.

6. Procédé selon la revendication 4, fournissant à chaque groupement de noeuds des groupements de noeuds un identifiant utilisé pour générer des requêtes de recherche qui réalisent des limites pour un ensemble de classes contenues dans le groupement de noeuds.
